# DEMANDE DE BREVET EUROPEEN

(11) **EP 4 661 244 A1**
(43) Date de publication de la demande: **10.12.2025**
(21) Numéro de dépôt: 25180548.7
(22) Date de dépôt: 03.06.2025
(51) Int. Cl.: H02J 13/00, H02J 50/00, H02J 50/80

(54) **PROCEDES D AFFICHAGE D'UNE INFORMATION VISUELLE DANS AU MOINS UN APPAREILLAGE ELECTRIQUE, APPAREILLAGE ELECTRIQUE ET INSTALLATION ASSOCIES**

(30) Priorité: 04.06.2024 FR 2405832
(71) Demandeur: Hager Next, 67210 Obernai (FR)
(72) Inventeur: ZEISSLOFF, Thibaut, 67210 BERNARDSWILLER (FR)
(74) Mandataire: Ipsilon

(57) **Abrégé**

L'invention concerne un appareillage électrique (1) comportant un module de communication sans fil (2) comportant un premier récepteur (3) et configuré pour être alimenté électriquement par une énergie captée (EN) à partir de l'intensité du champ électromagnétique (EM), un indicateur lumineux (6) configuré pour émettre un signal lumineux, un boîtier (7) contenant à l'intérieur le module de communication sans-fil (2) et l'indicateur lumineux (6) caractérisé en ce qu'il comprend un module de contrôle (9) contenu dans le boîtier (7) relié électriquement au premier récepteur (3) et à l'au moins un indicateur lumineux (6), en ce que le module de contrôle (9) est configuré pour être alimenté au moins par au moins une partie de l'énergie captée (EN) au moins en l'absence d'alimentation par le réseau électrique ou une source auxiliaire de sorte à être apte et destiné à alimenter l'au moins un indicateur lumineux (6).

## Description

L'invention concerne le domaine des appareillages électriques de préférence de protection, le domaine des installations comprenant de tels appareillages électriques et une unité de communication distante et le domaine des procédés d'affichage d'une information visuelle dans de tels appareillages électriques.

Dans des systèmes de distribution électrique, il est courant d'installer une pluralité d'appareillages électriques de protection les uns à côté des autres par exemple dans un tableau de distribution électrique.

Il est connu que des appareillages électriques de protection peuvent communiquer à distance avec un smartphone à l'aide de la technologie en champ proche dite NFC. Dans ce sens, la publication US2014170971A1 divulgue un système de distribution électrique dans lequel des informations sont communiquées vers et/ou depuis un composant électrique du système de distribution électrique tel qu'un interrupteur par communication en champ proche. Les informations peuvent être communiquées vers et/ou depuis le composant électrique à l'aide d'une unité de communication distante en champ proche, par exemple un smartphone.

Toutefois, dans le cas de l'application de cette solution à une pluralité d'appareillages électriques, il n'est pas possible de savoir de manière fiable avec lequel des appareillages électriques de protection l'unité de communication distante communique par champ proche. Il est à noter que les appareillages électriques de protection sont en outre généralement implantés dans un tableau de distribution électrique dans lequel ils sont disposés très proches les uns des autres. Il en résulte que les antennes NFC des différents appareillages électriques peuvent ainsi être quasi jointives et situées à moins d'un centimètre les unes des autres dans la situation la plus critique.

Dans le domaine de la communication sans fil, il est connu d'allumer un indicateur lumineux par exemple une diode électroluminescente ou LED pour identifier le produit avec lequel l'unité de communication distante communique.

Cette méthode présente le désavantage de nécessiter une source d'alimentation électrique pour alimenter électriquement l'indicateur lumineux, ce qui pose des problèmes de fiabilité dans le cas où cette source est défaillante ou absente.

Le document WO2023200328A1 divulgue un disjoncteur comportant une LED pour l'indication de l'état de l'appareil disjoncteur et un récepteur. L'antenne du récepteur est connectée à un redresseur interne intégré au circuit intégré. Une partie de l'énergie RF est utilisée pour alimenter le circuit intégré du récepteur. Le reste de l'énergie est transmis à la broche de sortie, puis utilisée pour alimenter d'autres composants du circuit par exemple, circuit intégré, relais, LED. Toutefois, cette configuration ne permet pas d'identifier visuellement avec quel disjoncteur une communication est établie dans une installation comportant plusieurs disjoncteurs et notamment s'ils sont disposés à proximité les uns des autres. En effet, dans ce cas la distinction est plus complexe à réaliser.

La présente invention a pour but de pallier au moins l'un de ces inconvénients et vise à fournir une solution fiable pour donner une indication visuelle à un utilisateur dans un appareillage électrique en communication par champ électromagnétique en champ proche avec une unité de communication distante et permettant d'identifier de manière fiable avec quel appareillage électrique l'unité de communication distante communique parmi une pluralité d'appareillages électriques et notamment lorsqu'ils sont situés à proximité les uns des autres.

A cet effet, l'invention concerne un appareillage électrique selon la revendication 1.

L'invention concerne également une installation selon la revendication 10.

L'invention concerne également un procédé d'affichage d'une information visuelle dans l'au moins un appareillage électrique selon la revendication 14.

L'invention concerne également un procédé d'affichage d'une information visuelle dans l'au moins un appareillage électrique pour l'identification d'un appareillage électrique spécifique selon la revendication 15.

L'invention concerne un procédé d'affichage d'une information visuelle dans l'au moins un appareillage électrique pour diagnostiquer la présence d'un défaut selon la revendication 16.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente une vue schématique d'un appareillage électrique selon l'invention,
[Fig. 2] la figure 2 représente une vue d'une installation selon l'invention,
[Fig. 3] la figure 3 représente un schéma d'un procédé d'affichage d'une information visuelle selon l'invention,
[Fig. 4] la figure 4 représente un schéma d'un procédé d'affichage d'une information visuelle dans l'au moins un appareillage électrique pour l'identification d'un appareillage électrique spécifique selon l'invention,
[Fig. 5] la figure 5 représente un schéma d'un procédé d'adressage d'une commande ciblée à l'appareillage spécifique selon l'invention, et
[Fig. 6] la figure 6 représente un schéma d'un procédé d'affichage d'une information visuelle dans l'au moins un appareillage électrique pour identifier l'exécution d'une commande.

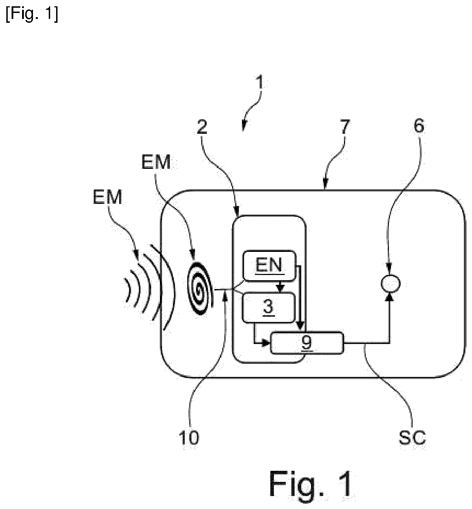

Comme l'illustre la figure 1, un appareillage électrique 1 de préférence de protection comporte au moins :
- une ligne électrique (non illustrée) agencée pour être raccordée au réseau électrique ou une source auxiliaire,
- un module de communication sans fil 2 comportant au moins un premier récepteur 3 configuré pour recevoir un champ électromagnétique EM en champ proche provenant d'une unité de communication distante 4 comportant au moins un deuxième émetteur 5 configuré pour émettre le champ électromagnétique EM laquelle étant distincte et à distance de l'appareillage électrique 1,
   le module de communication sans fil 2 étant au moins configuré pour être alimenté électriquement par une énergie captée EN à partir de l'intensité du champ électromagnétique EM du deuxième émetteur 5,
- au moins un indicateur lumineux 6 configuré pour émettre au moins un signal lumineux SL pour fournir au moins une information visuelle,
- un boîtier 7 traversé par la au moins une ligne électrique et contenant à l'intérieur au moins le module de communication sans-fil 2 et l'au moins un indicateur lumineux 6 monté dans le boîtier 7 de sorte que l'au moins un signal lumineux SL soit visible de l'extérieur du boîtier 7 et de préférence d'une face avant 8 du boîtier 7.

Conformément à l'invention, l'appareillage électrique 1 est caractérisé :
- en ce qu'il comprend un module de contrôle 9 contenu dans le boîtier 7 relié électriquement au premier récepteur 3 et à l'au moins un indicateur lumineux 6,
- en ce que le module de contrôle 9 est configuré pour être alimenté au moins par au moins une partie de l'énergie captée EN au moins en l'absence d'alimentation par le réseau électrique ou une source auxiliaire de sorte à être apte et destiné à alimenter l'au moins un indicateur lumineux 6.

Avantageusement, l'appareillage électrique 1 permet d'alimenter au moins un indicateur lumineux 6 à l'aide d'une unité de communication distante 4, aussi bien lorsque l'appareillage électrique 1 est connecté au réseau électrique ou une source auxiliaire et le cas échéant alimenté par le réseau électrique ou une source auxiliaire, que lorsque l'appareillage électrique 1 est déconnecté du réseau électrique et donc non alimenté par ce dernier ou une source auxiliaire, pour fournir notamment à un utilisateur une information visuelle sous la forme d'un signal lumineux SL. Cette solution est donc particulièrement fiable puisqu'elle fonctionne même lorsque l'appareillage électrique 1 n'est pas alimenté.

En effet, le module de communication sans fil 2 a la capacité de capter de l'énergie à partir de l'intensité du champ électromagnétique EM émis par le deuxième émetteur 5 de l'unité de communication distante 4 notamment pour permettre l'alimentation du module de contrôle 9 et consécutivement l'alimentation de l'au moins un indicateur lumineux 6. Cette configuration est particulièrement intéressante lorsque l'appareillage électrique 1 n'est pas raccordé au réseau électrique ou à une source auxiliaire et que le module de communication sans fil 2 ne peut donc pas être alimenté par le réseau électrique ou la source auxiliaire ou lorsque l'appareillage électrique 1 est raccordé au réseau électrique ou à la source auxiliaire mais n'est pas alimenté par le réseau électrique ou la source auxiliaire et que donc le module de communication sans fil 2 ne l'est pas non plus. En revanche, lorsque l'appareillage électrique 1 est raccordé et alimenté par le réseau électrique ou la source auxiliaire, le module de communication sans fil 2 peut fonctionner en mode actif et/ou passif. Par conséquent, dans le mode actif le module de contrôle 9 et donc l'au moins un indicateur lumineux 6 peuvent être alimentés par le réseau électrique ou la source auxiliaire et dans le mode passif le module de contrôle 9 et donc l'au moins un indicateur lumineux 6 peuvent seulement être alimentés par l'au moins une partie de l'énergie captée EN.

De plus, la solution présente l'avantage d'être peu couteuse en composants électroniques puisqu'il suffit d'ajouter un module de contrôle 9 dédié ou de réutiliser un module de contrôle 9 déjà présent dans le module de communication sans fil 2.

De préférence, le module de contrôle 9 est configuré pour commander l'émission du au moins un signal lumineux SL de l'au moins un indicateur lumineux 6 en émettant un signal de commande SC à destination dudit au moins un indicateur lumineux 6 en l'alimentant par l'au moins une partie de l'énergie captée EN à réception du champ électromagnétique EM par le premier récepteur 3 et, l'au moins un indicateur lumineux 6 est configuré pour émettre l'au moins un signal lumineux SL à réception du signal de commande SC, de sorte à fournir au moins une information visuelle représentative de l'alimentation du module de communication sans fil 2 par l'énergie captée EN à partir de l'intensité du champ électromagnétique EM du deuxième émetteur 5.

Avantageusement, l'appareillage électrique 1 permet de fournir notamment à un utilisateur une information visuelle représentative de l'alimentation du module de communication sans fil 2 par l'énergie captée EN à partir de l'intensité du champ électromagnétique EM du deuxième émetteur 5 aussi bien lorsque l'appareillage électrique 1 est connecté au réseau électrique ou une source auxiliaire et le cas échéant alimenté par le réseau électrique ou une source auxiliaire que lorsque l'appareillage électrique 1 est déconnecté du réseau électrique et donc non alimenté par ce dernier ou une source auxiliaire. Il est ainsi possible de fournir une indication visuelle fiable permettant d'identifier l'existence de l'alimentation du module de communication sans fil 2 par l'énergie captée EN. Ainsi, l'indicateur lumineux 6 s'allume à condition que l'au moins une partie de l'énergie captée EN soit suffisante pour alimenter l'indicateur lumineux 6. En résumé par cette configuration, il est possible de fournir une solution fiable pour donner une indication permettant d'identifier l'existence d'une alimentation du module de communication sans fil 2 par l'énergie captée EN.

Le module de communication sans fil 2 comporte au moins un premier émetteur/récepteur 3 pour établir un lien de communication bidirectionnelle spécifique avec l'unité de communication distante 4 comportant un deuxième émetteur/récepteur 5.

Le module de contrôle 9 est configuré pour émettre le signal de commande SC à destination de l'au moins un indicateur lumineux 6 en l'alimentant au moins par l'au moins une partie de l'énergie captée EN, si le lien de communication bidirectionnelle spécifique est établi et si un signal de commande dédié adressé spécifiquement au module de communication sans fil 2 en provenance de l'unité de communication distante 4 est réceptionné par le module de communication sans fil 2, et l'au moins un indicateur lumineux 6 est configuré pour émettre l'au moins un signal lumineux SL à réception du signal de commande SC, de sorte à fournir au moins une information visuelle représentative de l'établissement du lien de communication bidirectionnelle spécifique par le champ électromagnétique EM entre l'appareillage électrique 1 et l'unité de communication distante 4.

Avantageusement, l'appareillage électrique 1 permet de fournir notamment à un utilisateur une information visuelle représentant sous forme visible la présence d'une communication bidirectionnelle spécifique aussi bien lorsque l'appareillage électrique 1 est connecté au réseau électrique ou une source auxiliaire et le cas échéant alimenté par le réseau électrique ou une source auxiliaire que lorsque l'appareillage électrique 1 est déconnecté du réseau électrique et donc non alimenté par ce dernier ou une source auxiliaire. Il est ainsi possible de fournir une indication visuelle fiable permettant d'identifier l'existence d'une communication bidirectionnelle spécifique. Cette configuration permet notamment d'identifier de manière fiable avec quel appareillage électrique 1 l'unité de communication distante 4 communique parmi une pluralité d'appareillages électriques 1. On notera qu'elle permet en outre d'effectuer cette identification même lorsque les appareillages électriques 1 sont disposés à proximité les uns des autres, comme cela peut être par exemple le cas lorsqu'ils sont disposés dans un tableau de distribution électrique et que leur distinction est rendue plus complexe. Ainsi, l'indicateur lumineux 6 s'allume à la condition que l'appareillage électrique 1 et l'unité de commande distante 4 aient établi un lien de communication bidirectionnelle spécifique. Cette configuration permet d'identifier visuellement avec certitude quel est l'appareillage électrique 1 adressé spécifiquement, ce qui est particulièrement utile si par exemple des opérations de paramétrages par exemple d'affectation et/ou de configuration et/ou de maintenance et/ou de diagnostic doivent ensuite être opérées.

De préférence, le module de contrôle 9 est configuré pour émettre le signal de commande SC à destination de l'au moins un indicateur lumineux 6 en l'alimentant au moins par l'au moins une partie de l'énergie captée EN, si le lien de communication bidirectionnelle spécifique est établi et si un signal de commande dédié adressé spécifiquement au module de communication sans fil 2 comportant un moyen d'authentification unique est réceptionné par le module de communication sans fil 2.

Le moyen d'authentification unique peut comprendre de préférence un identifiant NFC programmé par le fabricant du module de communication sans fil 2 associé préalablement avec un identifiant unique programmé par le fabricant de l'appareillage électrique 1.

De préférence, le signal de commande dédié adressé spécifiquement au module de communication sans fil 2 en provenance de l'unité de communication distante 4 comprend au moins le moyen d'authentification unique qui peut utiliser de préférence un identifiant NFC programmé par le fabricant du module de communication sans fil 2 associé préalablement avec un identifiant unique programmé par le fabricant de l'appareillage électrique 1. Par exemple durant le processus de fabrication des appareillages électriques 1, chacun d'entre eux se voit attribuer un identifiant unique, maitrisé par le fabricant. Cet identifiant unique peut être mémorisé dans une mémoire non volatile de l'appareillage électrique 1. Dans chaque appareillage électrique 1, il y aura ainsi un identifiant NFC programmé par le fabricant du composant, et un identifiant unique programmé par le fabricant de l'appareillage électrique 1.

L'identifiant unique est de préférence utilisé pour authentifier l'appareillage électrique 1 dès la première communication avec l'unité de communication distante 4 via par exemple une application mobile, qui elle-même peut interroger la base de données distante du fabricant sur un service distant type cloud spécifique pour confirmer qu'il s'agit bien d'un appareillage électrique 1 fabriqué par le fabricant. Lors de ce premier échange, l'identifiant du composant de communication NFC est également récupéré pour ensuite être utilisé dans la suite des communications, notamment l'identification et les différents procédés décrits. Une association de l'identifiant NFC et de l'identifiant unique de l'appareillage électrique 1 est alors réalisée par l'unité de communication distante 4 via par exemple l'application mobile. Par la suite, l'identifiant NFC est utilisé pour identifier l'appareillage électrique 1 et ceci de manière spécifique. Ainsi, il n'est plus possible d'adresser des demandes ou d'identifier un produit tiers, qui ne serait pas configuré avec le moyen d'authentification unique, dans la ou les installations. L'utilisation de l'identifiant NFC est préférée pour des raisons d'efficacité de la communication sans fil. Cet identifiant unique spécifique est bien plus fort qu'un adressage logique des appareillages électriques 1 dans une installation. A titre d'exemple, il est possible d'affecter une adresse logique aux appareillages électriques 1 d'un tableau de distribution électrique de 1 à 31 et ceci par tableau. Chaque appareillage électrique 1 aura son adresse, mais dans le cas où plusieurs tableaux seraient disposés dans un même local, il est alors impossible de différencier par adressage logique, que l'appareillage électrique 1 que nous souhaitons identifier est le bon, et ceci de manière unique.

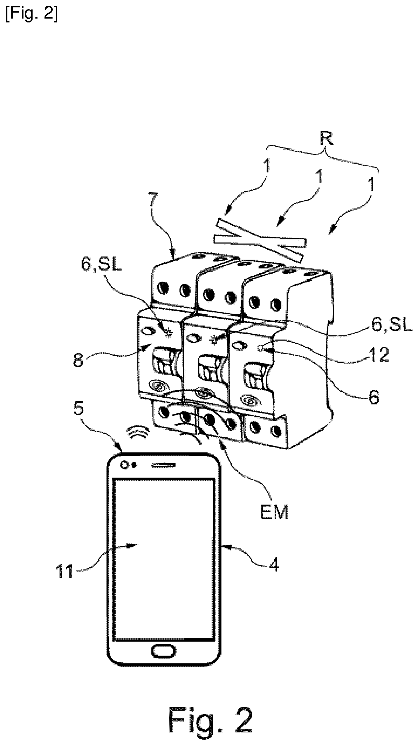

De préférence et comme l'illustre la figure 2, l'appareillage électrique 1 est un appareillage électrique de protection de type disjoncteur comprenant un module de coupure mécanique (non représenté) ou électronique (non représenté) et de préférence un module de contrôle électronique (non représenté) pour couper ladite au moins une ligne électrique en cas de défaut détecté par le module de contrôle électronique.

Avantageusement, l'appareillage électrique 1 permet de réaliser une fonction de protection contre un défaut électrique.

De préférence, le module de contrôle 9 est configuré pour émettre le signal de commande SC à destination dudit au moins un indicateur lumineux 6 en l'alimentant par l' au moins une partie de l'énergie captée EN à réception du champ électromagnétique EM par le premier récepteur 3 si au moins le module de contrôle électronique relié au module de contrôle 9 indique l'existence d'un défaut, et l'au moins un indicateur lumineux 6 est configuré pour émettre l'au moins un signal lumineux SL à réception du signal de commande SC, de sorte à fournir au moins une information visuelle représentative de la présence d'un défaut de l'appareillage électrique 1.

Avantageusement, l'appareillage électrique 1 permet de fournir notamment à un utilisateur une information visuelle représentant sous forme visible la présence d'un défaut dans l'appareillage électrique 1 aussi bien lorsque l'appareillage électrique 1 est connecté au réseau électrique ou une source auxiliaire et le cas échéant alimenté par le réseau électrique ou une source auxiliaire que lorsque l'appareillage électrique 1 est déconnecté du réseau électrique et donc non alimenté par ce dernier ou une source auxiliaire. Il est ainsi possible de fournir une indication visuelle fiable permettant d'identifier l'existence d'un défaut d'appareillage électrique 1. Ainsi, l'indicateur lumineux 6 s'allume à la condition supplémentaire qu'un défaut ait été détecté et que cette information ait été communiquée au module de contrôle 9. Cette information représentative de l'existence d'un défaut peut avoir été stockée préalablement dans une mémoire reliée électriquement au module de contrôle 9 ou en faisant partie.

De préférence, le module de communication sans fil 2 est dit passif et est configuré pour être alimenté électriquement exclusivement par l'énergie captée EN et le module de contrôle 9 est configuré pour être alimenté exclusivement par l'au moins une partie de l'énergie captée EN, en l'absence et en présence d'alimentation du module de communication sans fil 2 et du module de contrôle 9 par le réseau électrique ou une source auxiliaire.

Dans cette configuration, seule l'énergie captée EN par le module de communication sans fil 2 à partir de l'intensité du champ électromagnétique EM émis par le deuxième émetteur/récepteur 5 de l'unité de communication distante 4 est utilisée pour fournir l'information visuelle via l'au moins un indicateur lumineux 6. L'énergie provenant du réseau électrique ou de la source auxiliaire n'est jamais utilisée dans cette configuration même si elle est disponible.

De préférence, l'au moins un indicateur lumineux 6 comprend au moins une diode électroluminescente.

Avantageusement, cette solution d'indicateur lumineux 6 de type LED présente l'avantage d'être peu couteuse et de consommer peu d'énergie électrique, c'est-à-dire que la consommation est de l'ordre de quelques milliampères, de préférence de 2 milliampères.

Préférentiellement et comme l'illustre la figure 2, le boîtier 7 est au format modulaire, c'est-à-dire que la largeur modulaire est un multiple d'un module valant 18 millimètres ou 17,5 millimètres.

Avantageusement, dans ce cas l'appareillage électrique 1 présente un format compact avec de préférence une largeur modulaire valant un module soit 18 millimètres ou deux modules soit 36 millimètres.

De préférence, le module de communication sans-fil 2 comprend le module de contrôle 9.

Cette configuration permet de simplifier l'architecture de l'appareillage électrique 1.

De préférence, l'appareillage électrique 1 peut être un disjoncteur ou une horloge ou une minuterie ou un appareil de communication.

De préférence, le disjoncteur est un disjoncteur ouvert couramment désigné par l'acronyme ACB signifiant Air Circuit Breaker en anglais ou un disjoncteur à boîtier moulé couramment désigné par l'acronyme MCCB signifiant Molded Case Circuit Breaker en anglais ou un bloc différentiel additionnel couramment désigné par l'acronyme AOB signifiant Add On Block en anglais. Ce type de disjoncteur n'est en revanche pas modulaire. Ces exemples ne sont pas limitatifs.

L'appareillage électrique 1 peut aussi être un appareillage électrique de protection à coupure électronique.

L'appareillage de protection à coupure électronique peut être modulaire et être par exemple un disjoncteur modulaire statique du type SCCB (Semi Conductor Circuit Breaker) ou un disjoncteur différentiel modulaire statique SC-RCBO (Semi Conductor Residual current Circuit Breaker with Overload). Ces exemples ne sont pas limitatifs.

De préférence, l'appareillage électrique 1 est agencé pour pouvoir être installé dans le tableau de distribution électrique (non représenté).

De préférence, ladite au moins une ligne électrique comprend au moins un conducteur électrique qui peut être alimenté par exemple par le réseau électrique.

De préférence, le module de communication sans fil 2 permet le cas échéant d'émettre et de recevoir des ondes électromagnétiques en champ proche via la technologie en champ proche couramment appelée NFC. Le module de communication sans fil 2 peut être alimenté soit indirectement et sans contact par l'unité de commande distante 4 par communication en champ proche ou directement à partir du réseau électrique ou d'une source auxiliaire si celle-ci est alimentée en électricité. En effet, le module de communication sans fil 2 peut être alimenté électriquement par l'énergie captée EN à partir de l'intensité du champ électromagnétique EM du deuxième émetteur 5. L'énergie captée EN est une énergie électromagnétique. Une partie de l'énergie captée EN peut être utilisée pour alimenter électriquement le module de contrôle 9 et l'indicateur lumineux 6. Cette partie de l'énergie captée EN peut correspondre à une portion de l'énergie captée EN qui n'a pas été consommée par le module de communication sans fil 2. Le module de communication sans fil 2 peut comprendre soit le premier récepteur 3, soit le premier émetteur/récepteur 3. Dans le premier cas, le module de communication sans fil 2 pourra établir au moins un lien de communication unidirectionnelle avec l'unité de commande distante 4. Dans le second cas, le module de communication sans fil 2 pourra établir au moins un lien de communication unidirectionnelle ou bidirectionnelle avec l'unité de commande distante 4, la communication pouvant être bidirectionnelle à condition que ce dernier soit muni du deuxième émetteur/récepteur 5. Le premier récepteur 3 ou le premier émetteur/récepteur 3 est relié électriquement au module de contrôle 9 soit directement, soit indirectement. Dans ce dernier cas, une unité de stockage est de préférence située entre le premier récepteur 3 ou le premier émetteur/récepteur 3 et le module de contrôle 9, comme détaillé ci-après.

De préférence, le module de communication sans fil 2 est conforme à la norme IEC15693.

De préférence, le premier récepteur 3 ou le premier émetteur/récepteur 3 comprend au moins une antenne 10.

L'unité de commande distante 4 est de préférence un smartphone comportant de préférence une application mobile ou une tablette ou un ordinateur portable. L'unité de commande distante 4 comprend de préférence un afficheur 11 par exemple un écran.

Le deuxième émetteur/récepteur 5 permet d'émettre et de recevoir des ondes électromagnétiques en champ proche via la technologie en champ proche couramment appelée NFC. L'unité de commande distante 4 et le module de communication sans fil 2 peuvent échanger des signaux électromagnétiques à distance. Le deuxième émetteur/récepteur 5 peut alimenter le module de communication sans fil 2. L'unité de communication distante 4 peut comprendre soit un deuxième émetteur 5, soit un deuxième émetteur/récepteur 5. Dans le premier cas, l'unité de communication distante 4 pourra établir au moins un lien de communication unidirectionnelle avec l'unité de commande distante 4. Dans le second cas, l'unité de communication distante 4 pourra établir au moins un lien de communication unidirectionnelle ou bidirectionnelle avec le module de communication sans fil 2, la communication pouvant être bidirectionnelle à condition que ce dernier soit muni du premier émetteur/récepteur 3.

L'unité de commande distante 4 comprend de préférence un microcontrôleur (non représenté).

L'indicateur lumineux 6 a pour fonction d'émettre au moins un signal lumineux SL. L'indicateur lumineux 6 peut être opéré même après la coupure du champ électromagnétique EM et donc de l'éloignement de l'unité de communication distante 4, tant que l'au moins une partie de l'énergie captée EN récupérée précédemment reste suffisante pour permettre son fonctionnement. Le signal lumineux SL peut être continu ou discontinu ou modulé. Le signal lumineux SL peut émettre dans différentes longueurs d'ondes. L'indicateur lumineux 6 peut être alimenté par l'au moins une partie de l'énergie captée EN via le module de contrôle 9 qui est alimenté soit directement par celle-ci, soit indirectement par celle-ci à partir d'une unité de stockage (non représentée). Dans ce dernier cas, l'unité de stockage est reliée électriquement au premier émetteur/récepteur 3 pour stocker l'au moins une partie de l'énergie captée EN et au module de contrôle 9 pour permettre son alimentation électrique. L'unité de stockage peut comprendre au moins une capacité. L'unité de stockage est configurée pour stocker de l'énergie électrique qui peut être au moins une partie de l'énergie captée EN qui n'a pas été consommée. L'avantage de l'unité de stockage est de permettre une accumulation d'énergie qui peut être restituée ultérieurement, ce qui permet par exemple d'alimenter l'indicateur lumineux 6 plus longtemps ou d'alimenter un indicateur lumineux 6 qui consomme d'avantage qu'une LED.

Le boîtier 7 comprend de préférence une ouverture 12 sur la face avant 8. L'indicateur lumineux 6 débouche de préférence au niveau de l'ouverture 12.

Le module de contrôle 9 est de préférence un microcontrôleur (non représenté). Le signal de commande SC permet d'alimenter l'indicateur lumineux 6 et de commander l'émission du signal lumineux SL.

Comme l'illustre la figure 2, l'invention concerne également une installation comprenant l'au moins un appareillage électrique 1 comportant le module de communication sans fil 2 comportant l'au moins un premier récepteur 3 et l'unité de communication distante 4, l'unité de communication distante 4 comportant au moins le deuxième émetteur 5 configuré pour émettre le champ électromagnétique EM en champ proche et étant distincte et à distance de l'au moins un appareillage électrique 1, le module de communication sans fil 2 étant configuré pour être alimenté par l'énergie captée EN à partir de l'intensité du champ électromagnétique EM du deuxième émetteur 5 de l'unité de communication distante 4, caractérisée en ce que l'au moins un appareillage électrique 1 est selon l'invention telle que décrite précédemment.

Avantageusement, le deuxième émetteur 5 de l'unité de communication distante 4 est prévu pour émettre le champ électromagnétique EM pour permettre l'alimentation du module de contrôle 9 et consécutivement l'alimentation de l'au moins un indicateur lumineux 6 de l'au moins un appareillage électrique 1. L'installation permet de fournir une information visuelle de manière fiable à un utilisateur.

De préférence, l'installation comprend une pluralité d'appareillages électriques 1, et le module de communication sans fil 2 des appareillages électriques 1 est configuré pour être alimenté par l'énergie captée EN à partir de l'intensité du champ électromagnétique EM du deuxième émetteur 5 de l'unité de communication distante 4.

Dans cette configuration, le deuxième émetteur/récepteur 5 de l'unité de communication distante 4 est prévu pour émettre le champ électromagnétique EM pour permettre l'alimentation du module de contrôle 9 et consécutivement l'alimentation de l'au moins un indicateur lumineux 6 de la pluralité d'appareillages électriques 1.

De préférence l'installation comprend une pluralité d'appareillages électriques 1 avec le module de communication sans fil 2 comportant au moins un premier émetteur/récepteur 3 pour établir un lien de communication bidirectionnelle spécifique avec l'unité de communication distante 4 comportant un deuxième émetteur/récepteur 5 et l'unité de communication distante 4 et les appareillages électriques 1 sont configurés pour communiquer par une pluralité de liens de communication unidirectionnelle ou bidirectionnelle par champ électromagnétique EM entre l'unité de communication distante 4 et chacun des appareillages électriques 1.

Avantageusement, l'installation permet de fournir notamment à un utilisateur plusieurs informations visuelles représentant sous forme visible une pluralité de liens de communication unidirectionnelle par le champ électromagnétique EM entre l'ensemble ou seulement un ou certains des appareillages électriques 1 et l'unité de communication distante 4. Toutefois dans cette configuration, il n'est pas nécessairement possible d'identifier visuellement avec certitude quel est l'appareillage électrique 1 adressé car l'indicateur lumineux 6 de chaque appareillage électrique 1 dans le champ électromagnétique EM émettra un signal lumineux SL.

De manière alternative, l'installation permet de fournir notamment à un utilisateur plusieurs informations visuelles représentant sous forme visible une pluralité de liens de communication bidirectionnelle par le champ électromagnétique EM. Chaque lien étant entre l'ensemble ou seulement un ou certains des appareillages électriques 1 et l'unité de communication distante 4. Dans cette configuration, il est possible d'adresser la communication à une seul appareillage électrique 1 spécifique et donc d'identifier visuellement avec certitude quel est l'appareillage électrique 1 adressé, car seul l'indicateur lumineux 6 de cet appareillage électrique 1 spécifique dans le champ électromagnétique EM émettra un signal lumineux SL

De préférence l'installation comprend en outre un tableau de distribution électrique dans lequel est installée la pluralité d'appareillages électriques 1, les appareillages électriques 1 étant accolés les uns aux autres sur au moins une rangée R et l'unité de communication distante 4 étant de préférence distante du tableau de distribution électrique.

Dans cette configuration, il est possible de fournir avec fiabilité des informations visuelles à un utilisateur alors que les appareillages électriques 1 sont à proximité immédiate les uns des autres et installés dans un tableau de distribution électrique.

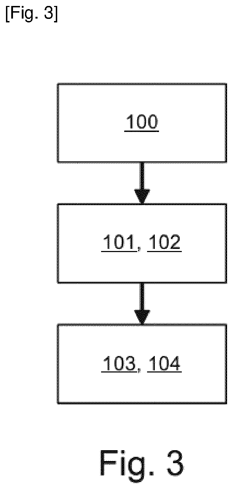

Comme l'illustre la figure 3, l'invention concerne également un procédé d'affichage d'une information visuelle dans l'au moins un appareillage électrique 1 qui comporte au moins :
- une étape d'émission du champ électromagnétique 100, lors de laquelle le deuxième émetteur 5 de l'unité de communication distante 4 émet le champ électromagnétique EM en champ proche et l'unité de communication distante 4 est approchée de l'appareillage électrique 1 préférentiellement à une distance inférieure à 5 centimètres,
- une étape de réception du champ électromagnétique 101, lors de laquelle le premier récepteur 3 du module de communication sans fil 2 de l'au moins un appareillage électrique 1 reçoit le champ électromagnétique EM en champ proche et est alimenté électriquement par l'énergie captée EN à partir de l'intensité du champ électromagnétique EM du deuxième émetteur 5,
- une étape d'alimentation 102, lors de laquelle le module de contrôle 9 de l'au moins un appareillage électrique 1 est alimenté au moins par l'au moins une partie de l'énergie captée EN,
- une étape de commande 103, lors de laquelle le module de contrôle 9 de l'au moins un appareillage électrique 1 commande l'émission du au moins un signal lumineux SL de l'au moins un indicateur lumineux 6 en émettant le signal de commande SC à destination de l'au moins un indicateur lumineux 6 et en l'alimentant au moins par l'au moins une partie de l'énergie captée EN,
- une étape d'émission lumineuse 104, lors de laquelle l'au moins un indicateur lumineux 6 de l'au moins un appareillage électrique 1 émet l'au moins un signal lumineux SL à réception du signal de commande SC de sorte à fournir au moins une information visuelle représentative de l'alimentation du module de communication sans fil 2 par l'énergie captée EN à partir de l'intensité du champ électromagnétique EM du deuxième émetteur 5.

Avantageusement, dans l'au moins un appareillage électrique à partir de l'énergie captée EN qui a été extraite alimente l'au moins un indicateur lumineux 6 afin qu'il émette l'au moins un signal lumineux SL.

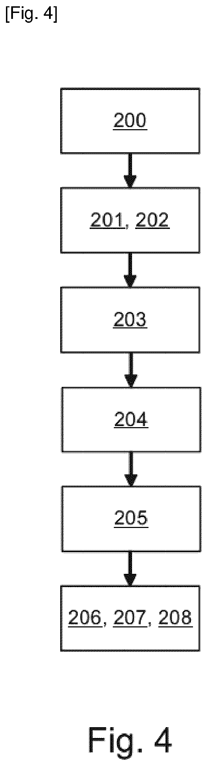

Comme l'illustre la figure 4, l'invention concerne également un procédé d'affichage d'une information visuelle dans l'au moins un appareillage électrique 1 pour l'identification d'un appareillage électrique 1 spécifique qui comprend au moins:
- une étape d'émission du champ électromagnétique 200, lors de laquelle le deuxième émetteur/récepteur 5 de l'unité de communication distante 4 émet le champ électromagnétique EM en champ proche et l'unité de communication distante 4 est approchée de la pluralité d'appareillages électriques 1 préférentiellement à une distance inférieure à 5 centimètres,
- une étape de réception du champ électromagnétique 201, lors de laquelle le premier émetteur/récepteur 3 du module de communication sans fil 2 de la pluralité d'appareillages électriques 1 reçoit le champ électromagnétique EM en champ proche et est alimenté électriquement par l'énergie captée EN à partir de l'intensité du champ électromagnétique du deuxième émetteur/récepteur 5,
- une étape d'alimentation 202, lors de laquelle le module de contrôle 9 de la pluralité d'appareillages électriques 1 est alimenté au moins par l'au moins une partie de l'énergie captée EN,
- une étape de découverte et d'appairage 203, 204, lors de laquelle l'unité de communication distante 4 est approchée de la pluralité d'appareillages électriques 1 préférentiellement à une distance inférieure à 5 centimètres et le deuxième émetteur/récepteur 5 émet un signal d'inventaire puis le premier émetteur/récepteur 3 du module de communication sans fil 2 émet un signal de communication d'identification puis le deuxième émetteur/récepteur 5 de l'unité de commande distante 4 reçoit le signal de communication d'identification de sorte à établir le lien de communication bidirectionnelle spécifique avec un appareillage électrique 1 spécifique, puis
- une étape d'émission du signal de commande dédié 205, lors de laquelle le deuxième émetteur/récepteur 5 émet un signal de commande dédié adressé spécifiquement au premier émetteur/récepteur 3 du module de communication sans fil 2 de l'appareillage électrique 1 spécifique, puis
- une étape de réception du signal de commande dédié 206, lors de laquelle au module de communication sans fil 2 de l'appareillage électrique 1 spécifique reçoit le signal de commande dédié adressé spécifiquement, puis
- une étape de commande 207, le module de contrôle 9 de l'appareillage électrique 1 spécifique commande l'émission du au moins un signal lumineux SL de l'au moins un indicateur lumineux 6 en émettant le signal de commande SC à destination de l'au moins un indicateur lumineux 6 et en l'alimentant au moins par l'au moins une partie de l'énergie captée EN,
- une étape d'émission lumineuse 208, l'au moins un indicateur lumineux 6 de l'appareillage électrique 1 spécifique émet l'au moins un signal lumineux SL à réception du signal de commande SC de sorte à fournir au moins une information visuelle représentative de l'existence d'une communication bidirectionnelle spécifique par le champ électromagnétique EM entre l'appareillage électrique 1 spécifique et l'unité de communication distante 4.

Avantageusement, seulement dans l'appareillage électrique 1 spécifique l'énergie captée EN qui a été extraite alimente l'au moins un indicateur lumineux 6 afin qu'il émette l'au moins un signal lumineux SL. L'utilisateur peut identifier visuellement l'appareillage électrique 1 spécifique car il sera le seul à émettre l'au moins un signal lumineux SL.

De préférence, lors de l'étape de découverte et d'appairage 203, 204, les appareillages électriques 1 répondent au signal d'inventaire avec leur propre identifiant avec un mécanisme anticollision conforme à la norme IEC15693.

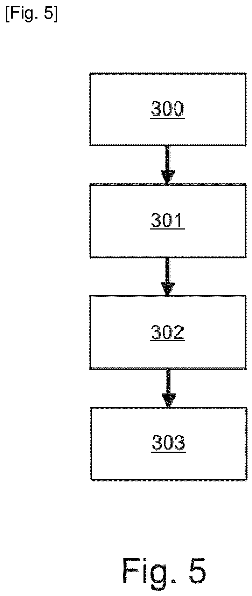

De manière optionnelle et comme l'illustre la figure 5, après la mise en œuvre du procédé d'affichage d'une information visuelle dans l'au moins un appareillage électrique 1 pour l'identification d'un appareillage électrique 1 spécifique qui vient d'être décrit il est possible de mettre en œuvre un procédé d'adressage d'une commande ciblée à l'appareillage spécifique 1. Dans ce cas, le procédé comprend au moins :
- une étape d'émission du champ électromagnétique 300, lors de laquelle le deuxième émetteur/récepteur 5 de l'unité de communication distante 4 émet le champ électromagnétique EM en champ proche et l'unité de communication distante 4 est approchée de la pluralité d'appareillages électriques 1 préférentiellement à une distance inférieure à 5 centimètres,
- une étape de réception du champ électromagnétique 301, lors de laquelle le premier émetteur/récepteur 3 du module de communication sans fil 2 de la pluralité d'appareillages électriques 1 reçoit le champ électromagnétique EM en champ proche et est alimenté électriquement par l'énergie captée EN à partir de l'intensité du champ électromagnétique du deuxième émetteur/récepteur 5,
- une étape d'émission d'une commande ciblée 302, lors de laquelle le deuxième émetteur/récepteur 5 de l'unité de communication distante 4 émet le champ électromagnétique EM pour transmettre une commande ciblée,
- une étape de réponse 303, lors de laquelle le premier émetteur/récepteur 3 du module de communication sans fil 2 de la pluralité d'appareillages électriques 1 reçoit la commande ciblée et émet le champ électromagnétique EM pour former une réponse au deuxième émetteur/récepteur 5.

Avantageusement, dans cette configuration l'appareillage électrique 1 spécifique et l'unité de communication distante 4 établissent un lien de communication lors duquel l'unité de communication distante 4 communique en premier la commande ciblée puis l'appareillage électrique 1 spécifique émet une réponse grâce à l'énergie captée EN. La commande ciblée peut consister en un paramétrage de l'appareillage électrique 1.

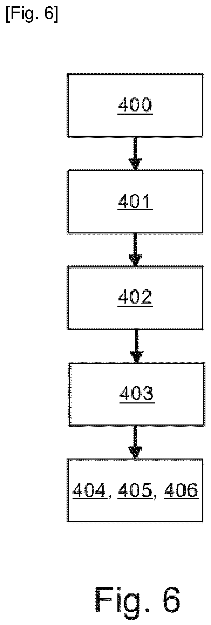

De manière optionnelle et comme l'illustre la figure 6, après la mise en œuvre du procédé d'affichage d'une information visuelle dans l'au moins un appareillage électrique 1 pour l'identification d'un appareillage électrique 1 spécifique qui vient d'être décrit il est possible de mettre en œuvre un procédé d'affichage d'une information visuelle dans l'au moins un appareillage électrique 1 pour identifier l'exécution d'une commande. Dans ce cas, le procédé comprend au moins :
- une étape d'émission du champ électromagnétique 400, lors de laquelle le deuxième émetteur/récepteur 5 de l'unité de communication distante 4 émet le champ électromagnétique EM en champ proche et l'unité de communication distante 4 est approchée de la pluralité d'appareillages électriques 1 préférentiellement à une distance inférieure à 5 centimètres,
- une étape de réception du champ électromagnétique 401, lors de laquelle le premier émetteur/récepteur 3 du module de communication sans fil 2 de la pluralité d'appareillages électriques 1 reçoit le champ électromagnétique EM en champ proche et est alimenté électriquement par l'énergie captée EN à partir de l'intensité du champ électromagnétique du deuxième émetteur/récepteur 5,
- une étape d'émission d'une commande ciblée 402, lors de laquelle le deuxième émetteur/récepteur 5 de l'unité de communication distante 4 émet le champ électromagnétique EM pour transmettre une commande ciblée,
- une étape d'exécution de la commande 403, lors de laquelle le premier émetteur/récepteur 3 du module de communication sans fil 2 de la pluralité d'appareillages électriques 1 reçoit la commande ciblée et le module de contrôle 9 exécute ladite commande,
- une étape d'alimentation 404, lors de laquelle le module de contrôle 9 de l'au moins un appareillage électrique 1 est alimenté au moins par l'au moins une partie de l'énergie captée EN,
- une étape de commande 405, lors de laquelle le module de contrôle 9 de l'au moins un appareillage électrique 1 commande l'émission du au moins un signal lumineux SL de l'au moins un indicateur lumineux 6 en émettant le signal de commande SC à destination de l'au moins un indicateur lumineux 6 en l'alimentant au moins par l'au moins une partie de l'énergie captée EN, puis
- une étape d'émission lumineuse 406, lors de laquelle l'au moins un indicateur lumineux 6 de l'au moins un appareillage électrique 1 émet l'au moins un signal lumineux SL à réception du signal de commande SC de sorte à fournir au moins une information visuelle représentative de l'exécution de la commande.

Avantageusement, dans cette configuration l'appareillage électrique 1 spécifique et l'unité de communication distante 4 établissent un lien de communication lors duquel l'unité de communication distante 4 communique en premier la commande ciblée puis l'appareillage électrique 1 spécifique exécute la commande ciblée puis émet le signal lumineux SL pour permettre à l'utilisateur de visualiser qu'une commande est en cours d'exécution. La commande ciblée peut consister en un paramétrage de l'appareillage électrique 1.

L'invention concerne un procédé d'affichage d'une information visuelle dans l'au moins un appareillage électrique 1 pour diagnostiquer la présence d'un défaut qui comprend au moins :
- une étape d'émission du champ électromagnétique, lors de laquelle le deuxième émetteur 5 de l'unité de communication distante 4 émet le champ électromagnétique EM en champ proche et l'unité de communication distante 4 est approchée de l'appareillage électrique 1 préférentiellement à une distance inférieure à 5 centimètres,
- une étape de réception du champ électromagnétique, lors de laquelle le premier récepteur 3 du module de communication sans fil 2 de l'au moins un appareillage électrique 1 reçoit le champ électromagnétique EM en champ proche et est alimenté électriquement par l'énergie captée EN à partir de l'intensité du champ électromagnétique du deuxième émetteur 5,
- une étape d'alimentation, lors de laquelle le module de contrôle 9 de l'au moins un appareillage électrique 1 est alimenté au moins par l'au moins une partie de l'énergie captée EN,
- une étape d'indication de présence d'un défaut, lors de laquelle le module de contrôle électronique relié au module de contrôle 9 communique l'existence d'un défaut au module de contrôle 9, puis
- une étape de commande, lors de laquelle le module de contrôle 9 de l'au moins un appareillage électrique 1 commande l'émission du au moins un signal lumineux SL de l'au moins un indicateur lumineux 6 en émettant le signal de commande SC à destination de l'au moins un indicateur lumineux 6 en l'alimentant au moins par l'au moins une partie de l'énergie captée EN, puis
- une étape d'émission lumineuse, lors de laquelle l'au moins un indicateur lumineux 6 de l'au moins un appareillage électrique 1 émet l'au moins un signal lumineux SL à réception du signal de commande SC de sorte à fournir au moins une information visuelle représentative de la présence d'un défaut de l'appareillage électrique 1.

Avantageusement, dans ce cas seul le ou les appareillages électriques 1 qui ont communiqué l'existence d'un défaut sont autorisés à alimenter à partir de l'énergie captée EN qui a été extraite l'au moins un indicateur lumineux 6 afin qu'il émette l'au moins un signal lumineux SL. L'utilisateur peut identifier visuellement le ou les appareillages électrique 1 présentant un défaut car ils seront les seuls à émettre l'au moins un signal lumineux SL.

La figure 1 illustre un exemple d'appareillage électrique selon l'invention. L'appareillage électrique 1 de la figure 1 comprend au moins une ligne électrique qui n'est pas illustrée. En outre, l'appareillage électrique 1 comprend le module de communication sans fil 2 comportant le premier récepteur 3 configuré pour recevoir le champ électromagnétique EM en champ proche. Le module de communication sans fil 2 est agencé pour être alimenté électriquement par l'énergie captée EN à partir de l'intensité du champ électromagnétique EM. L'appareillage électrique 1 comprend également un indicateur lumineux 6 sous la forme d'une LED. Selon l'invention, l'appareillage électrique 1 présente la particularité de comprendre le module de contrôle 9 qui est relié électriquement au premier récepteur 3 et à l'indicateur lumineux 6. Le module de contrôle 9 est configuré pour être alimenté au moins par au moins une partie de l'énergie captée EN au moins en l'absence d'alimentation par le réseau électrique ou une source auxiliaire de sorte à permettre l'alimentation de l'indicateur lumineux 6. Le boîtier 7 de l'appareillage électrique 1 contient le module de communication sans-fil 2, le module de contrôle 9 et l'indicateur lumineux 6.

La figure 2 illustre un exemple d'installation dans laquelle les appareillages électriques 1 sont au format modulaire et l'unité de communication distante 4 est un smartphone qui comprend le deuxième émetteur 5. Les appareillages électriques 1 ne sont pas alimentés par le réseau électrique ou une source auxiliaire. Les appareillages électriques 1 sont accolés les uns aux autres sur une rangée R. Dans ce cas, la largeur modulaire de chaque appareillage électrique 1 est d'un module soit environ 18 millimètres et est inférieure à la largeur d'un smartphone généralement supérieure à 18 millimètres et par exemple d'environ 70 millimètres. Chaque appareillage électrique 1 comprend un indicateur lumineux 6 monté dans le boîtier 7 de sorte que le signal lumineux SL soit visible de l'extérieur du boîtier 7 au niveau de la face avant 8 du boîtier 7. L'indicateur lumineux 6 sous la forme d'une LED débouche dans l'ouverture 12 située sur la face avant 8.

Dans cet exemple d'installation de la figure 2, selon une possibilité le champ électromagnétique EM pourra être présenté par l'unité de communication distante 4 à la pluralité d'appareillages électriques 1 du tableau de distribution électrique et grâce à l'indicateur lumineux 6 de chaque appareillage électrique 1, il sera possible d'identifier quels sont les appareillages électriques 1 qui réceptionnent ou non le champ électromagnétique EM car alors l'indicateur lumineux 6 de chaque appareillage électrique 1 émettra un signal lumineux SL.

Dans cet exemple d'installation, selon une autre possibilité le champ électromagnétique EM pourra alternativement être présenté par l'unité de communication distante 4 à la pluralité d'appareillages électriques 1 du tableau de distribution électrique et seul l'indicateur lumineux 6 de l'appareillage électrique 1 spécifique adressé émettra un signal lumineux SL et il est possible d'identifier l'appareillage électrique 1 adressé qui établit un lien de communication bidirectionnelle spécifique avec l'unité de communication distante 4.

La figure 3 illustre un exemple du procédé d'affichage d'une information visuelle dans l'au moins un appareillage électrique 1. Le procédé comporte :
- l'étape d'émission du champ électromagnétique 100, puis
- l'étape de réception du champ électromagnétique 101, puis
- l'étape d'alimentation 102, puis
- l'étape de commande 103, puis
- l'étape d'émission lumineuse 104.

La figure 4 illustre un exemple du procédé d'affichage d'une information visuelle dans l'au moins un appareillage électrique 1 pour l'identification d'un appareillage électrique 1 spécifique qui comprend:
- l'étape d'émission du champ électromagnétique 200, puis
- l'étape de réception du champ électromagnétique 201, puis
- l'étape d'alimentation 202, puis
- l'étape de découverte et d'appairage 203, 204, puis
- l'étape d'émission du signal de commande dédié 205, puis
- l'étape de réception du signal de commande dédié 206, puis
- l'étape de commande 207, puis
- l'étape d'émission lumineuse 208.

La figure 5 illustre un exemple du procédé d'adressage d'une commande ciblée à l'appareillage spécifique 1 qui comprend :
- l'étape d'émission du champ électromagnétique 300, puis
- l'étape de réception du champ électromagnétique 301, puis
- l'étape d'émission d'une commande ciblée 302, puis
- l'étape de réponse 303.

La figure 6 illustre un exemple du procédé d'affichage d'une information visuelle dans l'au moins un appareillage électrique 1 pour identifier l'exécution d'une commande. Dans ce cas, le procédé comprend au moins :
- l'étape d'émission du champ électromagnétique 400, puis
- l'étape de réception du champ électromagnétique 401, puis
- l'étape d'émission d'une commande ciblée 402, puis
- l'étape d'exécution de la commande 403, puis
- l'étape d'alimentation 404, puis
- l'étape de commande 405, puis
- l'étape d'émission lumineuse 406.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Appareillage électrique (1) comportant au moins :
- une ligne électrique agencée pour être raccordée au réseau électrique ou une source auxiliaire,
- un module de communication sans fil (2) comportant au moins un premier récepteur/émetteur (3) configuré pour recevoir un champ électromagnétique (EM) en champ proche et pour établir un lien de communication bidirectionnelle spécifique, le module de communication sans fil (2) étant au moins configuré pour être alimenté électriquement par une énergie captée (EN),
- au moins un indicateur lumineux (6) configuré pour émettre au moins un signal lumineux (SL) pour fournir au moins une information visuelle,
- un boîtier (7) traversé par la au moins une ligne électrique et contenant à l'intérieur au moins le module de communication sans-fil (2) et l'au moins un indicateur lumineux (6) monté dans le boîtier (7) de sorte que l'au moins un signal lumineux (SL) soit visible de l'extérieur du boîtier (7) ,
- en ce qu'il comprend un module de contrôle (9) contenu dans le boîtier (7) relié électriquement au premier récepteur (3) et à l'au moins un indicateur lumineux (6),
en ce que le module de contrôle (9) est configuré pour être alimenté au moins par au moins une partie de l'énergie captée (EN) au moins en l'absence d'alimentation par le réseau électrique ou une source auxiliaire de sorte à être apte et destiné à alimenter l'au moins un indicateur lumineux (6),l'appareil électrique est **caractérisé en ce que** :
- le module de contrôle (9) est configuré pour émettre un signal de commande (SC) à destination de l'au moins un indicateur lumineux (6) en l'alimentant au moins par l'au moins une partie de l'énergie captée (EN), si le lien de communication bidirectionnelle spécifique est établi et si un signal de commande dédié adressé spécifiquement au module de communication sans fil (2) est réceptionné par le module de communication sans fil (2),
- et **en ce que** l'au moins un indicateur lumineux (6) est configuré pour émettre l'au moins un signal lumineux (SL) à réception du signal de commande (SC), de sorte à fournir au moins une information visuelle représentative de l'établissement du lien de communication bidirectionnelle spécifique par le champ électromagnétique (EM).

2. Appareillage électrique selon la revendication 1, **caractérisé en ce que** :
- le module de contrôle (9) est configuré pour commander l'émission du au moins un signal lumineux (SL) de l'au moins un indicateur lumineux (6) en émettant le signal de commande (SC) à destination dudit au moins un indicateur lumineux (6) en l'alimentant par l'au moins une partie de l'énergie captée (EN) à réception du champ électromagnétique (EM) par le premier récepteur (3) et,
- **en ce que** l'au moins un indicateur lumineux (6) est configuré pour émettre l'au moins un signal lumineux (SL) à réception du signal de commande (SC), de sorte à fournir au moins une information visuelle représentative de l'alimentation du module de communication sans fil (2) par l'énergie captée (EN) à partir de l'intensité du champ électromagnétique (EM) du deuxième émetteur (5).

3. Appareillage électrique selon l'une quelconque des revendications 1 à 2, **caractérisé en ce que** l'appareillage électrique (1) est un appareillage électrique de protection de type disjoncteur comprenant un module de coupure mécanique ou électronique et de préférence un module de contrôle électronique pour couper ladite au moins une ligne électrique en cas de défaut détecté par le module de contrôle électronique.

4. Appareillage électrique selon la revendication 3, **caractérisé en ce que** :
- le module de contrôle (9) est configuré pour émettre le signal de commande (SC) à destination dudit au moins un indicateur lumineux (6) en l'alimentant par l'au moins une partie de l'énergie captée (EN) à réception du champ électromagnétique (EM) par le premier récepteur (3) si au moins le module de contrôle électronique relié au module de contrôle (9) indique l'existence d'un défaut, et
- **en ce que** l'au moins un indicateur lumineux (6) est configuré pour émettre l'au moins un signal lumineux (SL) à réception du signal de commande (SC), de sorte à fournir au moins une information visuelle représentative de la présence d'un défaut de l'appareillage électrique (1).

5. Appareillage électrique selon l'une quelconque des revendications 1 à 4, **caractérisé en ce que** le module de communication sans fil (2) est dit passif et est configurée pour être alimenté électriquement exclusivement par l'énergie captée (EN) et le module de contrôle (9) est configuré pour être alimenté exclusivement par l'au moins une partie de l'énergie captée (EN), en l'absence et en présence d'alimentation du module de communication sans fil (2) et du module de contrôle (9) par le réseau électrique ou une source auxiliaire.

6. Appareillage électrique selon l'une quelconque des revendications 1 à 5, **caractérisé en ce que** l'au moins un indicateur lumineux (6) comprend au moins une diode électroluminescente.

7. Appareillage électrique selon l'une quelconque des revendications 1 à 6, **caractérisé en ce que** le boîtier (7) est au format modulaire.

8. Appareillage électrique selon l'une quelconque des revendications 1 à 7, **caractérisé en ce que** le module de communication sans-fil (2) comprend le module de contrôle (9).

9. Appareillage électrique selon l'une quelconque des revendications 1 à 8, **caractérisé en ce que** le module de contrôle (9) est configuré pour émettre le signal de commande (SC) à destination de l'au moins un indicateur lumineux (6) en l'alimentant au moins par l'au moins une partie de l'énergie captée (EN), si le lien de communication bidirectionnelle spécifique est établi et si un signal de commande dédié adressé spécifiquement au module de communication sans fil (2) comportant un moyen d'authentification unique est réceptionné par le module de communication sans fil (2).

10. Installation comprenant l'au moins un appareillage électrique (1) comportant le module de communication sans fil (2) comportant l'au moins un premier récepteur (3) et une unité de communication distante (4), l'unité de communication distante (4) comportant au moins un deuxième émetteur (5) configuré pour émettre le champ électromagnétique (EM) en champ proche et étant distincte et à distance de l'au moins un appareillage électrique (1), le module de communication sans fil (2) étant configuré pour être alimenté par l'énergie captée (EN) à partir de l'intensité du champ électromagnétique (EM) du deuxième émetteur (5) de l'unité de communication distante (4), **caractérisée en ce que** l'au moins un appareillage électrique (1) est selon l'une quelconque des revendications 1 à 9.

11. Installation selon la revendication 10, **caractérisée en ce que** l'installation comprend une pluralité d'appareillages électriques (1), et **en ce que** le module de communication sans fil (2) des appareillages électriques (1) est configuré pour être alimenté par l'énergie captée (EN) à partir de l'intensité du champ électromagnétique (EM) du deuxième émetteur (5) de l'unité de communication distante (4).

12. Installation selon la revendication 11, **caractérisée en ce que** l'au moins un appareillage électrique (1) est selon l'une quelconque des revendications 1 à 9, l'installation comprend une pluralité d'appareillages électriques (1), l'unité de communication distante (4) comporte un deuxième émetteur/récepteur (5) et **en ce que** l'unité de communication distante (4) et les appareillages électriques (1) sont configurés pour communiquer par une pluralité de liens de communication unidirectionnelle ou bidirectionnelle par champ électromagnétique (EM) entre l'unité de communication distante (4) et chacun des appareillages électriques (1).

13. Installation selon la revendication 11 ou la revendication 12, **caractérisée en ce qu'**elle comprend en outre un tableau de distribution électrique dans lequel est installée la pluralité d'appareillages électriques (1), les appareillages électriques (1) étant accolés les uns aux autres sur au moins une rangée (R) et l'unité de communication distante (4) étant de préférence distante du tableau de distribution électrique.

14. Procédé d'affichage d'une information visuelle dans l'au moins un appareillage électrique (1) selon l'une quelconque des revendications 2 à 9 dans l'installation selon l'une quelconque des revendications 10 à 13, le procédé comporte au moins :
- une étape d'émission du champ électromagnétique (100), lors de laquelle le deuxième émetteur (5) de l'unité de communication distante (4) émet le champ électromagnétique (EM) en champ proche et l'unité de communication distante (4) est approchée de l'appareillage électrique (1) préférentiellement à une distance inférieure à 5 centimètres,
- une étape de réception du champ électromagnétique (101), lors de laquelle le premier récepteur (3) du module de communication sans fil (2) de l'au moins un appareillage électrique (1) reçoit le champ électromagnétique (EM) en champ proche et est alimenté électriquement par l'énergie captée (EN) à partir de l'intensité du champ électromagnétique (EM) du deuxième émetteur (5),
- une étape d'alimentation (102), lors de laquelle le module de contrôle (9) de l'au moins un appareillage électrique (1) est alimenté au moins par l'au moins une partie de l'énergie captée (EN),
- une étape de commande (103), lors de laquelle le module de contrôle (9) de l'au moins un appareillage électrique (1) commande l'émission du au moins un signal lumineux (SL) de l'au moins un indicateur lumineux (6) en émettant le signal de commande (SC) à destination de l'au moins un indicateur lumineux (6) et en l'alimentant au moins par l'au moins une partie de l'énergie captée (EN),
- une étape d'émission lumineuse (104), lors de laquelle l'au moins un indicateur lumineux (6) de l'au moins un appareillage électrique (1) émet l'au moins un signal lumineux (SL) à réception du signal de commande (SC) de sorte à fournir au moins une information visuelle représentative de l'alimentation du module de communication sans fil (2) par l'énergie captée (EN) à partir de l'intensité du champ électromagnétique (EM) du deuxième émetteur (5).

15. Procédé d'affichage d'une information visuelle dans l'au moins un appareillage électrique (1) pour l'identification d'un appareillage électrique (1) spécifique selon l'une quelconque des revendications 1 à 9 dans l'installation selon l'une quelconque des revendications 12 à 13, **caractérisé en ce que** le procédé comporte au moins :
- une étape d'émission du champ électromagnétique (200), lors de laquelle le deuxième émetteur/récepteur (5) de l'unité de communication distante (4) émet le champ électromagnétique (EM) en champ proche et l'unité de communication distante (4) est approchée de la pluralité d'appareillages électriques (1) préférentiellement à une distance inférieure à 5 centimètres,
- une étape de réception du champ électromagnétique (201), lors de laquelle le premier émetteur/récepteur (3) du module de communication sans fil (2) de la pluralité d'appareillages électriques (1) reçoit le champ électromagnétique (EM) en champ proche et est alimenté électriquement par l'énergie captée (EN) à partir de l'intensité du champ électromagnétique du deuxième émetteur/récepteur (5),
- une étape d'alimentation (202), lors de laquelle le module de contrôle (9) de la pluralité d'appareillages électriques (1) est alimenté au moins par l'au moins une partie de l'énergie captée (EN),
- une étape de découverte et d'appairage (203, 204), lors de laquelle l'unité de communication distante (4) est approchée de la pluralité d'appareillages électriques (1) préférentiellement à une distance inférieure à 5 centimètres et le deuxième émetteur/récepteur (5) émet un signal d'inventaire puis le premier émetteur/récepteur (3) du module de communication sans fil (2) émet un signal de communication d'identification puis le deuxième émetteur/récepteur (5) de l'unité de commande distante (4) reçoit le signal de communication d'identification de sorte à établir le lien de communication bidirectionnelle spécifique avec un appareillage électrique (1) spécifique, puis
- une étape d'émission du signal de commande dédié (205), lors de laquelle le deuxième émetteur/récepteur (5) émet un signal de commande dédié adressé spécifiquement au premier émetteur/récepteur (3) du module de communication sans fil (2) de l'appareillage électrique (1) spécifique, puis
- une étape de réception du signal de commande dédié (206), lors de laquelle au module de communication sans fil (2) de l'appareillage électrique (1) spécifique reçoit le signal de commande dédié adressé spécifiquement, puis
- une étape de commande (207), le module de contrôle (9) de l'appareillage électrique (1) spécifique commande l'émission du au moins un signal lumineux (SL) de l'au moins un indicateur lumineux (6) en émettant le signal de commande (SC) à destination de l'au moins un indicateur lumineux (6) et en l'alimentant au moins par l'au moins une partie de l'énergie captée (EN),
- une étape d'émission lumineuse (208), l'au moins un indicateur lumineux (6) de l'appareillage électrique (1) spécifique émet l'au moins un signal lumineux (SL) à réception du signal de commande (SC) de sorte à fournir au moins une information visuelle représentative de l'existence d'une communication bidirectionnelle spécifique par le champ électromagnétique (EM) entre l'appareillage électrique (1) spécifique et l'unité de communication distante (4).

16. Procédé d'affichage d'une information visuelle dans l'au moins un appareillage électrique (1) pour diagnostiquer la présence d'un défaut selon l'une quelconque des revendications 4 à 9 dans l'installation selon l'une quelconque des revendications 10 à 13, **caractérisé en ce que** le procédé comporte au moins :
- une étape d'émission du champ électromagnétique, lors de laquelle le deuxième émetteur (5) de l'unité de communication distante (4) émet le champ électromagnétique (EM) en champ proche et l'unité de communication distante (4) est approchée de l'appareillage électrique (1) préférentiellement à une distance inférieure à 5 centimètres,
- une étape de réception du champ électromagnétique, lors de laquelle le premier récepteur (3) du module de communication sans fil (2) de l'au moins un appareillage électrique (1) reçoit le champ électromagnétique (EM) en champ proche est alimenté électriquement par l'énergie captée (EN) à partir de l'intensité du champ électromagnétique du deuxième émetteur (5),
- une étape d'alimentation, lors de laquelle le module de contrôle (9) de l'au moins un appareillage électrique (1) est alimenté au moins par l'au moins une partie de l'énergie captée (EN),
- une étape d'indication de présence d'un défaut, lors de laquelle le module de contrôle électronique relié au module de contrôle (9) communique l'existence d'un défaut au module de contrôle (9), puis
- une étape de commande, lors de laquelle le module de contrôle (9) de l'au moins un appareillage électrique (1) commande l'émission du au moins un signal lumineux (SL) de l'au moins un indicateur lumineux (6) en émettant le signal de commande (SC) à destination de l'au moins un indicateur lumineux (6) en l'alimentant au moins par l'au moins une partie de l'énergie captée (EN), puis
- une étape d'émission lumineuse, lors de laquelle l'au moins un indicateur lumineux (6) de l'au moins un appareillage électrique (1) émet l'au moins un signal lumineux (SL) à réception du signal de commande (SC) de sorte à fournir au moins une information visuelle représentative de la présence d'un défaut de l'appareillage électrique (1).
